# EUROPÄISCHE PATENTSCHRIFT

(11) **EP 0 363 853 B1**
(45) Veröffentlichungstag und Bekanntmachung des Hinweises auf die Patenterteilung: **19.01.1994**
(21) Anmeldenummer: 89118654.6
(22) Anmeldetag: 07.10.1989
(51) Int. Cl.: G02B 6/28

(54) **Verfahren zur Herstellung eines faseroptischen Sternkopplers und nach diesem Verfahren hergestellter faseroptischer Sternkoppler**
Fibre-optical star coupler production method and star couplers produced by such a method
Procédé de fabrication d'un coupleur à étoile et coupleur à étoile produit par ledit procédé

(30) Priorität: 08.10.1988 DE 3834336
(43) Veröffentlichungstag der Anmeldung: 18.04.1990
(73) Patentinhaber: KABEL RHEYDT Aktiengesellschaft, D-41179 Mönchengladbach (DE)
(72) Erfinder: Huber, Peter, Dipl.-Phys., D-7910 Neu-Ulm (DE); Weidel, Edgar, Dipl.-Phys., D-7913 Senden (DE)
(74) Vertreter: Mende, Eberhard, Dipl.-Ing.

(56) Entgegenhaltungen:
- EP-A- 201 121
- EP-A- 0 219 096
- US-A- 4 179 185
- PATENT ABSTRACTS OF JAPAN, Band 9, Nr. 151 (P-367)[1874], 26. Juni 1985, Seite 150 P 367; & JP-A-60 29 710
- APPLIED OPTICS, Band 21, Nr. 11, 1. Juni 1982, Seiten 1940-1942, Optical Society of America, New York, US; N. TAKATO et al.: "Polymer waveguide star coupler"

## Beschreibung

Die Erfindung betrifft ein Verfahren zur Herstellung eines faseroptischen Sternkopplers und einen nach diesem Verfahren hergestellten faseroptischen Sternkoppler.

Zur optischen Datenübertragung mit Lichtwellenleitern über kurze Distanzen, typisch einige Meter bis einige hundert Meter, gewinnen polymere Lichtwellenleiter, d.h. aus Kunststoffmaterial hergestellte Lichtwellenleiter, zunehmendes wirtschaftliches Interesse. Sie sind wie Glaslichtwellenleiter aus einem Faserkern und einem Fasermantel aufgebaut, die jedoch beide aus optisch dämpfungsarmen, im allgemeinen polymeren Kunststoffen bestehen. Kunststoff-Lichtwellenleiter sind im Gegensatz zu Glas-Lichtwellenleiter auch bei Durchmessern in der Größenordnung von einem Millimeter sehr flexibel und mechanisch stabil. Durch geeignete Wahl der Kunststoffe werden relativ hohe numerische Aperturwerte, typisch um 0,5, erzielt. Ein großer Kerndurchmesser, z.B. 1mm, und eine hohe numerische Apertur der Lichtwellenleiter ermöglichen eine einfache, billige Koppeltechnik, z.B. für Steckverbindungen. Für komplexere Übertragungsnetze sind neben einfachen Steckverbindungen Koppler, die der Verzweigung oder Zusammenführung von Lichtwellenleitern dienen, notwendig. Derartige Koppler werden je nach Funktion als Sternkoppler, Richtkoppler oder T-Bus(Abzweig)-Koppler ausgeführt. Zur Herstellung von Kopplern sind eine Reihe verschiedener Prinzipien entwickelt worden, die z.B. in der Übersichtsarbeit von A.K. Agarawal in Fiber and Integrated Optics Vol. 6, No. 1, p. 27-53 dargestellt sind. Für Quarzglas-Lichtwellenleiter sind zahlreiche Kopplertypen realisiert worden. Ihre Herstellung ist im allgemeinen jedoch relativ aufwendig und teuer.

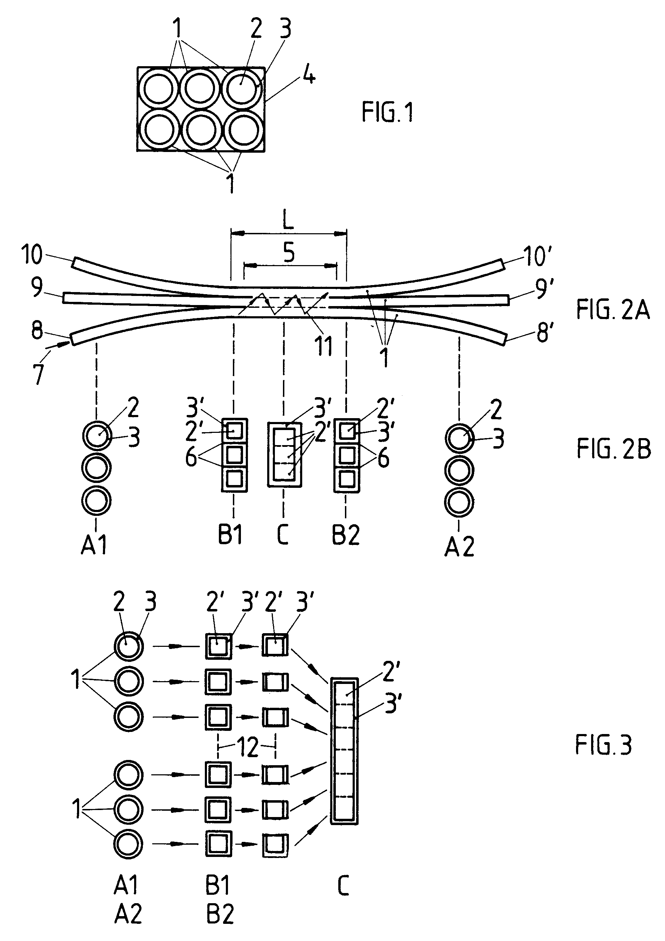

Da Kunststoff-Lichtwellenleiter aus wirtschaftlichen Gründen, z.B. wegen einer kostengünstigen Herstellung von faseroptischen Steck- und/oder Koppelverbindungen, im allgemeinen mit einem kreisförmigen Querschnitt hergestellt werden, ist für einen Sternkoppler aus Kunststoffmaterial die in FIG. 1 gezeigte Ausführungsform für sechs (Kunststoff-)Lichtwellenleiter mit kreisförmigen Querschnitt vorgeschlagen worden. Die Lichtwellenleiter 1 bestehen aus einem (Kunststoff-)Kern 2, mit einem Durchmesser von z.B. 1mm, und einem diesen umgebenden (Kunststoff-)Mantel 3, der z.B. eine Dicke von 20µm besitzt. Die Stirnflächen der Lichtwellenleiter 1 sind an die Stirnflächen eines (Kunststoff-) Mischerstabes 4, der z.B. einen rechteckförmigen Querschnitt besitzt, angekoppelt, z.B. durch Kleben. Diese Ausführungsform hat den Nachteil, daß die Querschnittsfläche des Mischerstabes 4 mindestens so groß sein muß, daß auch die Mantelflächen und die zwischen den Lichtwellenleitern 1 liegenden Flächen erfaßt werden. Dadurch entstehen optische Verluste aufgrund von prinzipiell ungünstigen Packungs- und Füllfaktoren, denn das in jedem einzelnen Lichtwellenleiter 1 ankommende Licht verteilt sich gleichmäßig über die Querschnittsfläche des Mischerstabes 4.

Bekannt ist auch bereits die Herstellung eines optischen Kopplers für den Anschluß an Lichtwellenleiter aus ummantelten Kunststoffsträngen durch Gießen eines Formteiles mit der Anzahl der anzuschließenden Lichtwellenleiter entsprechenden Anzahl von Ein- und Ausgängen. Der Anschluß der Lichtwellenleiter an dieses Kunststoff-Formteil bedingt zusätzliche Koppelstellen.

Der Erfindung liegt daher die Aufgabe zugrunde, ein Verfahren zur Herstellung eines faseroptischen Sternkopplern und einen nach diesem Verfahren hergestellten Sternkoppler anzugeben, der eine gleichmäßige Lichtverteilung auf alle Ausgangs-Lichtwellenleiter gewährleistet, der möglichst geringe optische Verluste aufweist, der mechanisch robust ist und der kostengünstig und zuverlässig herstellbar ist.

Das erfindungsgemäße Verfahren ist im Patentanspruch 1, der danach hergestellt Sternkoppler im Patentanspruch 2 und vorteilhafte Ausführen desselben sind in den Unteransprüchen beschrieben.

Die Erfindung wird im folgenden anhand von Ausführungsbeispielen unter Bezugnahme auf eine schematische Zeichnung näher erläutert.
- FIG. 2a und 2b: zeigen einen transmissiven Sternkoppler mit sechs Ein- und/oder Ausgängen,
- FIG. 3: erläutert die Herstellung eines Sternkopplers gemäß FIG. 2a.
- FIG. 4 und 5: zeigen weitere Ausführungsbeispiele von transmissiven Sternkopplern
- FIG. 6: zeigt einen reflektiven Sternkoppler
- FIG. 2a: zeigt die Seitenansicht eines transmissiven Sternkopplers.

In FIG. 2b sind die zugehörigen Querschnittsformen an verschiedenen Stellen dargestellt. Der Sternkoppler ist hergestellt aus drei (Kunststoff-)Lichtwellenleitern 1, die jeweils einen kreisförmigen Querschnitt besitzen. Dabei hat der (Kunststoff-)Kern 2 z.B. einen Durchmesser von 1mm und der (Kunststoff-)Mantel 3 z.B. eine Dicke von 20µm (Orte A1, A2 in FIG. 2a, 2b). Diese werden nun auf einer Länge L, z.B. L = 50mm, so verformt, z.B. durch Anwendung von Druck und Wärme, daß Kern 2′ und Mantel 3′ quadratische und/oder rechteckige Querschnittsformen besitzen (Orte B1, B2 in FIG. 2a, 2b). Dabei bleibt die Größe der Querschnittsfläche erhalten. Im Bereich des Mischerteils 5, das z.B. eine Länge von 30mm hat, werden die (quadratischen und/oder rechteckigen) Lichtwellenleiter zur Berührung gebracht und vorher an den sich ergebenden Berührungsflächen 6 der Mantel 3′ entfernt, z.B. durch Abschleifen, Abschälen, Abhobeln, thermisches Abtragen oder durch Abtragen mit Hilfe eines Eximerlasers. Anschließend erfolgt zumindest im Bereich des Mischerteils 5 ein optisches Zusammenfügen, z.B. durch Kleben, Kitten, Verschmelzen oder durch Adhesion der Lichtwellenleiter 1. In diesem Bereich entsteht ein im wesentlichen optisch homogener, rechteckförmiger Kern 2′ der von dem Mantel 3′ vollständig umgeben ist (Ort C in FIG. 2a, 2b). Dabei sind die ursprünglich vorhandenen Berührungsflächen 6 nur zum besseren Verständnis der Anordnung durch gestrichelte Linien dargestellt. Wird nun Licht 7 in eine der Eintrittsflächen 8, 9, 10 eingekoppelt, so wird es im Mischerteil 5 im wesentlichen gleichmäßig verteilt (Pfeile 11) und tritt gleichzeitig und gleichmäßig aus den Austrittsflächen 8′, 9′, 10′ aus.

FIG. 3 zeigt einen entsprechenden Herstellungsvorgang für einen Sternkoppler, der aus sechs (Kunststoff-) Lichtwellenleitern 1 hergestellt ist. Durch die gestrichelten Linien 12 ist angedeutet, daß die Anzahl der Lichtwellenleiter nahezu beliebig vergrößerbar ist.

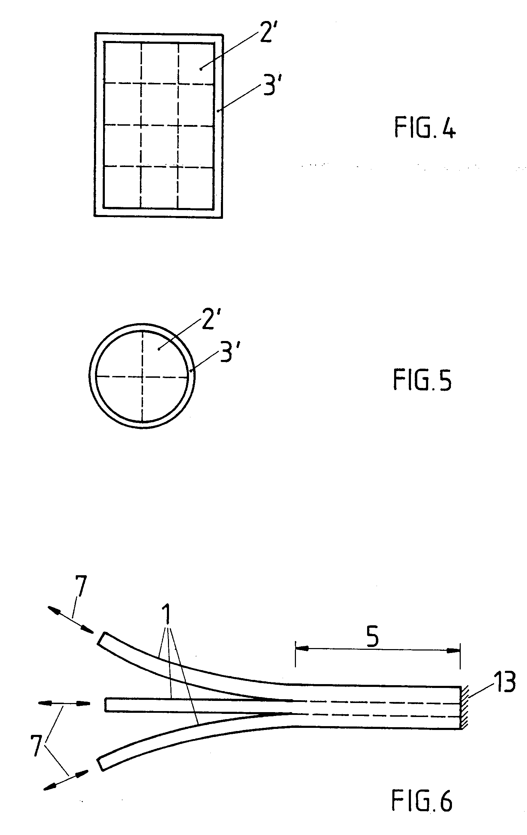

In den Ausführungsbeispielen entsprechend FIG. 2 und 3 sind die Lichtwellenleiter zumindest im Bereich des Mischerteils 5 linienförmig angeordnet (Querschnittsform am Ort C). FIG. 4 und 5 zeigen Ausführungsbeispiele, bei denen die Lichtwellenleiter zumindest im Bereich des Mischerteils 5 matrixförmig angeordnet sind.

Dabei hat bei dem Ausführungsbeispiel entsprechend FIG. 4 das Mischerteil 5 einen rechteckförmigen Querschnitt und ist aus dem optischen Zusammenfügen aus zwölf einzelnen (Kunststoff-)Lichtwellenleitern entstanden, die dort jeweils ursprünglich eine rechteckförmige oder quadratische Querschnittsform besessen hatten.

FIG. 5 zeigt ein Ausführungsbeispiel, das zumindest im Bereich des Mischerteils 5 eine kreisförmige Querschnittsform hat, die aus vier einzelnen Lichtwellenleitern entstanden ist. Diese hatten dort ursprünglich jeweils eine kreissektorförmige Querschnittsform.

FIG. 6 zeigt ein Ausführungsbeispiel für einen reflektiven Sternkoppler. Dabei sind die Lichtwellenleiter 1 entsprechend einem der Ausführungsbeispiele gemäß FIG. 2 bis 5 zu einem Mischerteil 5 optisch zusammengefügt. Dieses ist jedoch an einem Ende reflektierend ausgebildet, z.B. durch Aufdampfen einer spiegelnden Fläche 13. Die Lichtwellenleiter 1 sind dann für das Licht 7 gleichzeitig Ein- und Ausgangslichtwellenleiter, was durch die Doppelpfeile dargestellt ist.

Bei derartigen Sternkopplern gehen in vorteilhafter Weise die Querschnittsformen der einzelnen Lichtwellenleiter allmählich in die Querschnittsform des Mischerteils über. Damit werden störende optische Verluste vermieden, die auf den sogenannten Packungs- und/oder Füllfaktoren beruhen. Ein weiterer Vorteil besteht darin, daß der den Mischerteil bildende Mischerstab aus den Lichtwellenleitern 1 zusammengesetzt ist. Dadurch entfällt die ansonsten notwendige und verlustbehaftete Ankopplung von Lichtwellenleitern an einen Mischerstab.

Ein weiterer Vorteil besteht darin, daß derartige Sternkoppler eine hohe Zugfestigkeit in Längsrichtung besitzen, da die einzelnen Lichtwellenleiter 1 durchgehend sind. Dadurch entsteht außerdem eine hohe Zuverlässigkeit, da keine Koppelstellen an dem Mischerteil vorhanden sind.

Denn diese könnten z.B. durch mechanische Erschütterungen zerstört werden.

## Patentansprüche

1. Verfahren zur Herstellung eines faseroptischen Sternkopplers mit mehreren Lichtwellenleitern aus Kunststoffmaterial, die in einem Mischerteil einen optisch einheitlichen Stab bilden und im übrigen Bereich einen kreisrunden Querschnitt mit einem lichtleitenden Kern und einem diesen umgebenden Mantel aufweisen, dadurch gekennzeichnet,
- daß die einzelnen Lichtwellenleiter jeweils in einem für das Mischerteil vorgesehenen Längenabschnitt vom kreisrunden Querschnitt zu einer Querschnittsform umgeformt werden, die für eine flächige Zusammenfügung der Lichtwellenleiter zu dem optisch einheitlichen stab formigen Mischerteil geeignet ist,
- daß an den als Berührungsflächen vorgesehenen Flächen der umgeformten Lichtwellenleiter abschnite das Mantelmaterial entfernt wird und
- daß die Lichtwellenleiter mit flächiger Berührung jeweils an den von Mantelmaterial befreiten Flächen in paralleler Anordnung zu dem Mischerteil zusammengefügt werden.

2. Faseroptischer Sternkoppler mit einem stabförmigen Mischerteil bestehend aus mehreren Lichtwellenleitern, die optisch zusammengefaßt sind, dadurch gekennzeichnet,
- daß die einzelnen Lichtwellenleiter (1) vollständig aus Kunststoffmaterial bestehen und jeweils einen Kern (2) und einen diesen umgebenden Mantel (3) aufweisen
- daß die Querschnittsflächen der Lichtwellenleiter in einem Längenabschnitt so verformt sind, daß sich die Lichtwellenleiter in diesem Längenabschnitt flächig berühren können
- daß die Lichtwellenleiter (1) zumindest im Bereich des Mischerteils (5) parallel zueinander angeordnet sind
- daß an den jeweiligen Berührungsflächen (6) das Mantelmaterial entfernt ist und
- daß die Lichtwellenleiter (1) an den Berührungsflächen (6) optisch und mechanisch gekoppelt sind.

3. Faseroptischer Sternkoppler nach Anspruch 2, dadurch gekennzeichnet, daß die Lichtwellenleiter (1) zumindest im Bereich des Mischerteils (5) derart verformt sind, daß im wesentlichen ebene Berührungsflächen (6) entstehen.

4. Faseroptischer Sternkoppler nach Anspruch 2 oder Anspruch 3, dadurch gekennzeichnet, daß im Bereich des Mischerteils (5) die Lichtwellenleiter (1) derart verformt sind, daß die Querschnittsfläche des Kerns erhalten bleibt.

5. Faseroptischer Sternkoppler nach einem der Ansprüche 2 bis 4, dadurch gekennzeichnet, daß die Lichtwellenleiter (1) ursprünglich einen kreisförmigen Querschnitt besitzen, der im Bereich des Mischerteils (5) zu einem rechteckigen und/oder quadratischen Querschnitt verformt ist.

6. Faseroptischer Sternkoppler nach einem der Ansprüche 2 bis 5, dadurch gekennzeichnet, daß die Lichtwellenleiter (1) einen ursprünglich kreisförmigen Querschnitt besitzen, der im Bereich des Mischerteils (5) zu einem kreissektorförmigen Querschnitt verformt ist.

7. Faseroptischer Sternkoppler nach einem der Ansprüche 2 bis 6, dadurch gekennzeichnet, daß die Lichtwellenleiter (1) an einem Ende des Mischerteils (5), dessen anderes Ende reflektierend ausgebildet ist, angeordnet sind.

## Claims

1. Process for producing a fibre-optic star coupler having a plurality of optical waveguides of plastic material which form, in a mixer part, an optically uniform rod and have, in the remaining area, a circular cross-section with a light-conducting core and a cladding surrounding the latter, characterized
- in that the individual optical waveguides are in each case reformed, in a section of length intended for the mixer part, from the circular cross-section to a cross-sectional shape which is suitable for a laminar joining-together of the optical waveguides to form the optically uniform rod-shaped mixer part,
- in that, on the surfaces of the reformed optical waveguide sections intended as contact surfaces, the cladding material is removed, and
- in that the optical waveguides are joined together with laminar contact in each case on the surfaces freed of cladding material in parallel arrangement with respect to the mixer part.

2. Fibre-optic star coupler having a rod-shaped mixer part comprising a plurality of optical waveguides which are optically combined, characterized
- in that the individual optical waveguides (1) consist entirely of plastic material and have in each case a core (2) and a cladding (3) surrounding the latter,
- in that the cross-sectional surfaces of the optical waveguides are deformed in a section of length in such a way that the optical waveguides in this section of length can make laminar contact,
- in that the optical waveguides (1) are arranged parallel to one another, at least in the region of the mixer part (5),
- in that on the respective contact surfaces (6) cladding material is removed, and
- in that the optical waveguides (1) are optically and mechanically coupled on the contact surfaces (6).

3. Fibre-optic star coupler according to Claim 2, characterized in that the optical waveguides (1) are deformed, at least in the region of the mixer part (5), in such a way that substantially planar contact surfaces (6) are produced.

4. Fibre-optic star coupler according to Claim 2 or Claim 3, characterized in that, in the region of the mixer part (5), the optical waveguides (1) are deformed in such a way that the cross-sectional surface area of the core is preserved.

5. Fibre-optic star coupler according to one of Claims 2 to 4, characterized in that optical waveguides (1) originally have a circular cross-section which is deformed in the region of the mixer part (5) to form a rectangular and/or square cross-section.

6. Fibre-optic star coupler according to one of Claims 2 to 5, characterized in that the optical waveguides (1) have an originally circular cross-section which is deformed in the region of the mixer part (5) to form a cross-section in the shape of a sector of a circle.

7. Fibre-optic star coupler according to one of Claims 2 to 6, characterized in that the optical waveguides (1) are arranged at one end of the mixer part (5), the other end of which is of a reflective design.

## Revendications

1. Procédé pour fabriquer un coupleur en étoile à fibres optiques avec plusieurs conducteurs d'ondes lumineuses en matériau plastique, qui forment un barreau optique unitaire dans une partie mélangeuse et dans le reste présentent une section droite circulaire avec un noyau conducteur de lumière et une gaine qui l'entoure, caractérisé
- en ce qu'on déforme chacun des conducteurs d'ondes lumineuses sur un tronçon longitudinal de la partie mélangeuse, d'une section droite ronde à une section qui est adaptée pour l'assemblage plan des conducteurs d'ondes lumineuses en une partie mélangeuse en forme de barreau unitaire optique,
- en ce qu'on enlève le matériau de revêtement des surfaces des sections d'ondes lumineuses déformées prévues pour être en contact, et
- en ce qu'on assemble les conducteurs d'ondes lumineuses en les disposant parallèlement pour former la partie mélangeuse avec un contact plan entre les faces libres du matériau de recouvrement.

2. Coupleur en étoile à fibres optiques avec une partie mélangeuse en forme de barreau constitué de plusieurs conducteurs d'ondes lumineuses qui sont assemblés optiquement, caractérisé :
- en ce que chacun des conducteurs d'ondes lumineuses (1) est constitué en totalité de matériau plastique et présente un noyau (2) et une gaine (3) qui l'entoure,
- en ce que la section droite du conducteur d'ondes lumineuses est déformée dans un tronçon longitudinal de façon que les conducteurs de lumière sur ce tronçon longitudinal puissent être en contact à plat,
- en ce que les conducteurs de lumière (1) au moins dans la zone de la partie mélangeuse (5) sont disposés parallèlement les uns aux autres,
- en ce que sur chacune des surfaces en contact (6) le matériau de recouvrement est enlevé,
- en ce que les conducteurs d'ondes lumineuses (1) sont couplés optiquement et mécaniquement par leurs surfaces de contact (6).

3. Coupleur en étoile à fibres optiques selon la revendication 2, caractérisé en ce que les conducteurs d'ondes lumineuses (1) au moins dans la zone de la partie mélangeuse (5) sont déformés de façon qu'il y ait des surfaces de contact (6) sensiblement planes.

4. Coupleur en étoile à fibres optiques selon la revendications 2 ou 3, caractérisé en ce que dans la zone de la partie mélangeuse (5) les conducteurs d'ondes lumineuses sont déformés de façon que la surface de la section droite du noyau soit conservée.

5. Coupleur en étoile à fibres optiques selon l'une des revendications 2 à 4, caractérisé en ce que les conducteurs d'ondes lumineuses (1) possèdent originalement une section droite circulaire qui est déformée dans la zone de la partie mélangeuse (5) en une section rectangulaire ou carrée.

6. Coupleur en étoile à fibres optiques selon l'une des revendications 2 à 5, caractérisé en ce que les conducteurs d'ondes lumineuses (1) possèdent originalement une section droite circulaire qui est déformée dans la zone de la partie mélangeuse (5) en une section droite en forme de secteur de cercle.

7. Coupleur en étoile à fibres optiques selon l'une des revendications 2 à 6, caractérisé en ce que les conducteurs d'ondes lumineuses (1) sont disposés à une extrémité de la partie mélangeuse (5) dont l'autre extrémité est prévue réfléchissante.
